# FASCICULE DE BREVET EUROPEEN

(11) **EP 3 609 665 B1**
(45) Date de publication et mention de la délivrance du brevet: **07.06.2023**
(21) Numéro de dépôt: 18719982.3
(22) Date de dépôt: 16.04.2018
(51) Int. Cl.: B29B 11/16, B29C 70/30, D04B 21/16, D04B 1/16

(54) **PROCEDE DE REALISATION D'UNE PREFORME SECHE REALISEE PAR TRICOTAGE, PROCEDE DE FABRICATION D'UN PRODUIT EN MATERIAUX COMPOSITES A PARTIR DE LADITE PREFORME**
VERFAHREN ZUR HERSTELLUNG EINER DURCH STRICKEN HERGESTELLTEN TROCKENEN VORFORM, VERFAHREN ZUR HERSTELLUNG EINES PRODUKTS AUS VERBUNDWERKSTOFFEN AUS DIESER VORFORM
METHOD FOR PRODUCING A DRY PREFORM PRODUCED BY KNITTING, METHOD FOR MANUFACTURING A PRODUCT MADE OF COMPOSITE MATERIALS FROM SAID PREFORM

(30) Priorité: 14.04.2017 FR 1770381
(43) Date de publication de la demande: 19.02.2020
(73) Titulaire: Saint-Gobain Performance Plastics France, 89120 Charny Orée de Puisaye (FR)
(72) Inventeur: CONZE, Pierre, 31300 Toulouse (FR); BRAVARD, Jérôme, 11200 Cruscades (FR)
(74) Mandataire: Saint-Gobain Recherche
(86) Numéro de dépôt international: PCT/FR2018/050954
(87) Numéro de publication internationale: WO 2018/189497

(56) Documents cités:
- WO-A1-2014/174101
- DE-A1-102014 000 153
- JP-A- H0 489 207
- JP-A- 2011 241 505
- US-A1- 2016 075 061
- CUTOLO D ET AL: "PROCESSING OF PRODUCT FORMS FOR THE LARGE-SCALE MANUFACTURING OF ADVANCED THERMOPLASTIC COMPOSITES", POLYMERS FOR ADVANCED TECHNOLOGIES, WILEY & SONS, BOGNOR REGIS, GB, vol. 5, no. 9, 1 September 1994 (1994-09-01), pages 545-553, XP000484303, ISSN: 1042-7147, DOI: 10.1002/PAT.1994.220050913

## Description

La présente invention concerne un procédé de réalisation d'une préforme sèche, réalisée par tricotage, notamment pour la fabrication d'une pièce en matériaux composites.

Le procédé concerne aussi la fabrication d'un produit en matériaux composites à partir de la préforme sèche ainsi obtenue.

Les matériaux composites intéressent différents secteurs technologiques. En effet, les matériaux composites concernent les matériaux intégrant une armature et une matrice, ladite armature étant noyée dans cette matrice.

C'est ainsi que le béton armé peut être considéré comme un matériau composite. En effet, les caractéristiques intrinsèques du béton sont très modestes et les armatures en acier ou en matériaux de synthèse, intégrées dans la matrice en béton, conduisent à des performances totalement différentes et très nettement supérieures à celles de la seule matrice en béton.

Les matériaux composites obtenus à partir d'une matrice en résine et d'une armature en matériaux de synthèse, généralement des polymères mais aussi des métaux, relèvent du même principe général.

Si le principe est bien connu, le type d'armature, la disposition, la géométrie, la combinaison des matériaux, le positionnement de l'armature dans la pièce à obtenir, notamment, sont autant de paramètres à maîtriser, conduisant très rapidement à une infinité de solutions.

Il est aussi nécessaire de prendre en compte les aspects coûts, industrialisation, durabilité, reproductibilité et contrôle de la qualité.

Les solutions sont dès lors très complexes.

La présente invention vise le domaine des matériaux composites, quels que soient les domaines techniques d'application et quelles que soient les matrices utilisées, la seule condition étant la réalisation de la préforme par tricotage.

Le document DE102014000153 décrit la fabrication d'un matériau de base par tricotage d'un fil de chaîne et d'un fil de trame constitué d'une fibre de renfort. Le matériau de base peut être utilisé comme préforme pour matériau composite ou en tant que matériau pour gilet pare-balle.

La présente invention vise un procédé de fabrication d'une préforme tricotée sèche, transformable, intégrant des fils comprenant un matériau destiné à former tout ou partie de la matrice finale du composite.

Selon l'invention, une préforme tricotée sèche, transformable, est une armature dont une partie au moins des matériaux qui la constitue est apte à se transformer par changement d'état, par modification de la structure initiale, avec pour conséquence de ne plus pouvoir identifier de façon isolée les matériaux transformés dans le produit en matériaux composites ainsi obtenu.

Les matériaux composites organiques comprennent des fibres de synthèses minérales, comme le verre, ou des fibres organiques, qui forment l'armature et sont noyées dans une matrice dont la composition intègre au moins une résine organique.

Les techniques de fabrication du produit final conformé suivant un plan donné, sont diverses.

Le drapage consiste à disposer au moins une couche d'au moins un mat de fibres non tissées et/ou d'au moins un tissu obtenu à partir de fils tissés, sur la paroi intérieure d'une première partie d'un moule pour conférer à l'armature la forme générale. Ensuite, soit une seconde partie du moule est fermée, puis la composition de résine de la matrice est injectée sous pression en différents points choisis, soit une vessie est disposée sur l'ensemble et la résine est introduite en réalisant une dépression en différents points choisis de ladite vessie. Ces divers points d'injection ou de tirage par dépression ont pour but de permettre une répartition parfaite de la résine, sans bulle d'air emprisonnée, et pour faciliter le fluage de la résine à travers l'armature.

Les produits fabriqués en matériaux composites ont un avantage important, celui de pouvoir prendre des conformations géométriques très différentes et très complexes.

Dans le cas des armatures réalisées à partir de fibres non tissées ou tissées, dès que la forme est complexe, il est nécessaire de découper différentes pièces, de les superposer pour assurer la reprise de la résistance mécanique, d'ajouter des pièces de renfort localement, ce qui complique la mise en oeuvre. La reprise mécanique est d'ailleurs imparfaite car les fibres ne sont pas continues.

Le tricotage de fils, en 2D ou 3D, permet de réaliser un produit complexe, directement drapable sur une forme en 2D ou en 3D, assurant la continuité des fils dans tout le produit tricoté obtenu.

Le but est de permettre de répondre, directement avec un seul produit tricoté, à la fabrication d'un produit en matériaux composites en 3D.

Le but de la présente invention est de proposer une préforme tricotée sèche, transformable, telle que définie ci-avant.

La préforme tricotée, sèche, transformable, obtenue par le procédé selon l'invention intègre l'armature et ce qui va devenir, après transformation, une résine d'enrobage et/ou d'imprégnation, voire la matrice du composite.

Le procédé de fabrication d'une préforme sèche, transformable, notamment pour la fabrication d'un produit en matériaux composites, se caractérise en ce qu'il comprend la succession des étapes suivantes :
- tricotage trame/colonne simultané d'au moins un fil de maille et d'au moins un fil unidirectionnel de renfort, au moins un fil de maille comprenant un matériau de nature différente d'un matériau compris dans au moins un fil unidirectionnel de renfort, l'un desdits matériaux étant un matériau thermoplastique et l'autre matériau étant un matériau dit de renfort, au moins un fil unidirectionnel de renfort comprenant au moins un matériau de renfort et au moins un matériau thermoplastique, le matériau thermoplastique présentant un point de fusion inférieur au point de fusion du matériau de renfort,
- réalisation d'un tricot en trois dimensions constituant une préforme sèche, à la forme du produit à obtenir.

L'invention couvre aussi le procédé de réalisation d'un produit en matériaux composites obtenu à partir de la préforme sèche selon la présente invention, qui comprend la succession des étapes suivantes :
- mise en place de ladite préforme sur un mannequin au profil du produit à réaliser,
- chauffage pour atteindre au moins la température du point de fusion la plus basse, afin d'imprégner et/ou d'enrober le matériau de renfort par le au moins un matériau thermoplastique transformé par fusion, et
- refroidissement du produit ainsi obtenu.

On entend par fil de maille le fil formant les mailles du tricot. Dans un tricotage trame/colonne, ces mailles sont cueillies par les mailles de la rangée inférieure.

Un fil unidirectionnel de renfort (appelé fil UD) est un fil inséré dans les mailles du tricot, par dépose et emprisonnement dans les mailles, sans prise en charge par les mailles.

On entend par matériau thermoplastique un matériau polymère capable de fondre lors de la fabrication du composite, de manière à former tout ou partie de la matrice dudit composite. Comme exemples de matériaux thermoplastiques, on peut citer les polypropylènes ou les polycarbonates.

On entend par matériau de renfort, un matériau qui n'est pas susceptible de fondre lors de la fabrication du composite et qui est donc destiné à former l'armature du composite. Comme matériaux de renfort, on peut citer le verre, le carbone, le quartz, certaines matières plastiques résistantes thermiquement comme les aramides (par exemple le Kevlar^{®}).

Le fil de maille, peut être constitué d'un matériau, soit thermoplastique soit de renfort. Dans la description détaillée qui suit, le terme « matériau » peut alors être remplacé par « fil ». Alternativement, un fil peut comprendre plusieurs matériaux, en particulier un matériau de renfort et un matériau thermoplastique.

Selon une caractéristique du procédé, on tricote simultanément un seul fil de maille et un seul fil UD. Le fil de maille peut être constitué d'un seul matériau, ou comprendre plusieurs matériaux. Par exemple, le fil de maille est constitué d'un matériau de renfort et le fil UD comprend un matériau thermoplastique et un matériau de renfort.

Selon une autre caractéristique du procédé, on tricote simultanément une pluralité de fils de maille et/ou une pluralité de fils UD. Les mailles du tricot peuvent ainsi être formées d'une pluralité de fils de maille. De même, une pluralité de fils UD peut être introduite dans le tricot. La pluralité va de préférence de 2 à 10, notamment de 2 à 6. Toutes les combinaisons sont possibles, par exemple une pluralité de fils de maille (par exemple 2 ou 3) avec un seul fil UD, une pluralité de fils UD (par exemple 2 à 6) avec un seul fil de maille, ou encore une pluralité de fils de maille avec une pluralité de fils UD. La pluralité de fils UD peut avantageusement comprendre au moins un fil comprenant ou constitué d'un matériau thermoplastique et au moins un fil comprenant ou constitué d'un matériau de renfort. La pluralité de fils de maille peut comprendre au moins un fil comprenant ou constitué d'un matériau thermoplastique et au moins un fil comprenant ou constitué d'un matériau de renfort. La pluralité de fils de maille peut alternativement être constituée de fils comprenant ou constitués d'un matériau thermoplastique. La pluralité de fils de maille peut encore être constituée de fils comprenant ou constitués d'un matériau de renfort. Ici encore, toutes les combinaisons sont possibles et l'on peut citer par exemple une pluralité de fils UD comprenant au moins un fil thermoplastique et au moins un fil de renfort avec une pluralité de fils de maille comprenant également au moins un fil thermoplastique et au moins un fil de renfort, ou encore une pluralité de fils UD comprenant au moins un fil thermoplastique et au moins un fil de renfort avec un seul fil de maille constitué d'un matériau de renfort.

Comme indiqué précédemment, un fil peut être constitué d'un matériau ou comprendre plusieurs matériaux.

Selon l'invention, au moins un fil UD, notamment l'unique fil UD, comprend au moins un matériau de renfort et au moins un matériau thermoplastique, notamment est constitué d'un matériau de renfort et d'un matériau thermoplastique. Dans ce cas le (ou au moins un) fil de maille peut être soit constitué d'un matériau de renfort, soit constitué d'un matériau thermoplastique, soit encore comprendre un matériau de renfort et un matériau thermoplastique.

Selon une première variante, le fil UD comprend un fil d'un matériau de renfort autour duquel est torsadé un fil d'un matériau thermoplastique. On peut citer par exemple un fil de verre, un fil de carbone ou un fil d'aramide autour duquel est torsadé un fil de polypropylène.

Selon une deuxième variante, le fil UD comprend un fil d'un matériau de renfort entouré d'une gaine thermoplastique. Le fil UD peut par exemple être obtenu en faisant passer le fil constitué d'un matériau de renfort dans un bain de matière thermoplastique fondue, puis à coextruder l'ensemble. On peut citer par exemple un fil de verre, un fil de carbone ou un fil d'aramide entouré d'une gaine de polypropylène.

Selon une troisième variante, le fil UD peut comprendre le mélange intime d'une pluralité de filaments d'au moins un matériau de renfort et d'une pluralité de filaments d'au moins un matériau thermoplastique. On peut citer par exemple un fil constitué d'un mélange intime de filaments de carbone ou d'aramide et de filaments de polypropylène.

Quelle que soit la variante choisie, l'invention favorise une pénétration de la matière thermoplastique plus intime lors de la fabrication du composite et évite la formation de zones sèches. Il en résulte une meilleure transmission des efforts à l'armature, et donc une meilleure résistance mécanique pour le matériau composite final. Cela permet en outre d'augmenter la quantité de matériau thermoplastique dans la préforme.

On introduit lors du tricotage au moins un fil unidirectionnel de renfort afin d'améliorer les performances mécaniques du composite dans la direction de ce fil unidirectionnel. On peut introduire un seul fil UD, ou encore plusieurs fils UD, notamment deux fils UD.

Selon une caractéristique, le tricotage permet d'introduire des fils unidirectionnels de renfort, dits fils UD 90°, c'est-à-dire en trame. Ces fils sont déposés dans le sens des rangées, sans prise en charge dans les mailles, en étant emprisonnés dans lesdites mailles.

Ces fils de renfort unidirectionnels conduisent à une amélioration des performances mécaniques dans la direction de la trame.

Selon une autre caractéristique, éventuellement combinable avec la précédente, on prévoit aussi l'intégration de fils unidirectionnels de renfort, dits fils UD 0°, c'est-à-dire dans le sens des colonnes. Ces fils sont déposés dans le sens des colonnes, perpendiculairement à la trame, sans prise en charge dans les mailles mais simplement emprisonnés par les mailles.

Selon la présente invention, la préforme intègre un matériau destiné à former l'armature et un matériau destiné à former tout ou partie de la matrice afin d'obtenir un produit en matériaux composites, permettant même, dans certaines applications, la suppression des étapes d'injection et/ou d'infusion de résine. Si la quantité de matériau thermoplastique apporté par les fils (de maille ou UD) est suffisante, le matériau composite peut en effet être obtenu par chauffage de la préforme sans ajout de résine.

Le taux de matière thermoplastique dans la préforme est de préférence compris entre 10 et 90% en poids, notamment entre 50 et 70% en poids. Le deuxième mode de réalisation décrit ci-avant permet d'obtenir des quantités importantes de matière thermoplastique.

Les fils élaborés à partir de polymères thermoplastiques sont des fils synthétiques ayant des propriétés mécaniques permettant leur tricotage.

Les fils thermoplastiques sont peu sensibles au cisaillement et présentent des résistances mécaniques à la traction suffisantes pour que ces fils puissent être utilisés dans des machines de tricotage.

Les fils sont disposés dans le même guide fil ou sont tricotés au moins l'un dans le sens de la trame et au moins un autre dans le sens du tricot.

Les fils sont tricotés pour former un tricot en trois dimensions constituant une préforme, au profil 3D du produit à obtenir.

On peut utiliser pour cela des machines à tricoter trame du type rectiligne.

Les ratios des au moins deux fils ou matériaux différents sont gérés par l'alimentation desdits fils, notamment par le diamètre du fil ou en faisant varier la proportion de matériau thermoplastique dans le fil UD lorsque celui-ci en contient.

On peut donc gérer le ratio matrice/armature (ratio matériau de renfort/matériau thermoplastique) par le choix des fils, l'alimentation en fils, la contexture, ou en faisant varier la proportion de matériau thermoplastique dans le fil UD.

La précision du ratio est importante et surtout la répartition de la quantité des au moins deux matériaux sur la totalité de la surface du produit est parfaitement maîtrisée.

La préforme sèche présente une forme en trois dimensions. Elle présente de préférence une forme conique ou cylindrique. Il peut notamment s'agir d'un cylindre de section circulaire ou rectangulaire.

La préforme sèche peut comprendre une pluralité de zones (par exemple 2, 3 ou plus) se distinguant par la nature du fil de maille et/ou du fil UD. Il est ainsi possible d'adapter les propriétés, notamment mécaniques, de la préforme, selon les zones, en fonction de l'utilisation finale du composite. La préforme peut par exemple comprendre une première zone formée d'un premier fil de maille et d'un premier fil UD et une deuxième zone formée d'un deuxième fil de maille et d'un deuxième fil UD, le premier fil UD étant de nature différente du deuxième fil UD et/ou le premier fil de maille étant de nature différente du deuxième fil de maille.

Le procédé de fabrication d'un produit en matériaux composites à partir de la préforme sèche réalisée, prévoit ensuite de placer ladite préforme sèche, transformable, sur un mannequin au profil du produit à obtenir, rigide ou gonflable, lorsque la forme est complexe de façon à en permettre le retrait.

Selon le procédé de la présente invention, la préforme sèche tricotée obtenue est chauffée à la température de fusion de l'un au moins des matériaux (notamment fils) thermoplastiques utilisés, c'est-à-dire à une température qui rend ledit au moins un matériau thermoplastique visqueux voire liquide, au point de pouvoir enrober ou imprégner le au moins autre matériau (notamment fil) de la préforme, voire à noyer lesdits matériaux (notamment fils) dans la matrice thermoplastique ainsi obtenue. Dans le cas de plusieurs matériaux à points de fusion différents, la température retenue est celle de la température permettant de rendre visqueux les matériaux souhaités sans atteindre celle des matériaux devant rester solides.

Le procédé prévoit le refroidissement de la préforme après transformation, après dépassement du point de fusion de l'un au moins des matériaux thermoplastiques, pour obtenir un produit rigide, semi-rigide ou souple, au profil du produit à obtenir. Les caractéristiques de rigidité, semi-rigidité ou de souplesse, dépendent du ratio (ou du taux de matériau thermoplastique) : si la quantité de matériau thermoplastique est faible et imprègne seulement le au moins autre matériau, la souplesse sera importante; si la quantité de matériau thermoplastique est très importante et assure un enrobage débordant, la rigidité sera plus importante.

Selon un mode de réalisation préféré de l'invention, le procédé de fabrication du composite ne comprend pas d'étape d'ajout (notamment d'injection et/ou d'infusion) d'une résine. La préforme est utilisée directement en adaptant le ratio des matériaux pour obtenir les propriétés mécaniques recherchées, le au moins un matériau ou fil thermoplastique constituant alors la matrice après transformation et le au moins un matériau de renfort constituant l'armature. Cela est possible dans le cas d'une préforme rigide, donc contenant une proportion suffisante de matériau thermoplastique (typiquement au moins 30 ou 40% en poids).

La préforme sèche initiale devient directement le produit en 3D après transformation et retrait de la préforme du mannequin.

Selon une autre mode de réalisation, moins préféré, la préforme est intégrée dans une matrice en résine. A cet effet, la préforme transformée est intégrée dans un moule pour injection ou sous vessie pour infusion, afin de permettre l'intégration de ladite préforme dans une matrice comprenant au moins une résine destinée à être polymérisée à son tour pour obtenir un produit en matériaux composites avec le profil recherché. Cela peut être nécessaire lorsque la préforme est à majorité constituée de matériau de renfort, formant l'armature, avec un très faible taux de matériau thermoplastique. L'armature est alors rigide ou semi rigide ou encore souple et comprend uniquement des fils juste enrobés ou imprégnés par ledit au moins un polymère thermoplastique.

La résine dans laquelle est éventuellement noyée l'armature doit être compatible avec les matériaux de renfort et thermoplastique. La résine est par exemple choisie parmi les résines époxy.

La préforme peut être utilisée pour la réalisation de produits composites dans le bâtiment, en association avec des matériaux minéraux avec un liant hydraulique ou pour du second oeuvre, mais surtout pour les domaines de l'aéronautique, du médical, du mobilier cette énumération étant totalement non restrictive ou limitative.

Les exemples qui suivent illustrent l'invention de manière non-limitative.

### Exemple 1

Une préforme sèche en trois dimensions, de forme conique, a été obtenu en tricotant simultanément :
- en maille, un fil de verre (masse linéique de 34 tex, soit 34 mg/m) et un fil de polycarbonate (60 tex)
- en trame, trois fils UD de verre (100 tex) et 3 fils UD en polycarbonate (60 tex).

Le tricot contient donc une pluralité de fils de maille, en l'occurrence 2, dont des fils en matériau de renfort et des fils en matériau thermoplastique et une pluralité de fils UD, en l'occurrence 6, dont des fils en matériau de renfort et des fils en matériau thermoplastique.

Le tricot a pu être transformé en matériau composite sans ajout de résine.

### Exemple 2

Une préforme sèche en trois dimensions, sous la forme d'un tuyau circulaire, a été obtenu en tricotant simultanément :
- en maille, un fil de Kevlar^{®} (89 tex),
- en trame, un fil UD de Kevlar^{®} (158 tex) et 2 fils UD de PEI (132 tex)

Le tricot contient donc un seul fil de maille en un matériau de renfort et une pluralité de fils UD, en l'occurrence 3, dont un en matériau de renfort et deux fils en matériau thermoplastique.

Le tricot a pu être transformé en matériau composite sans ajout de résine.

## Revendications

1. Procédé de fabrication d'une préforme sèche, transformable, notamment pour la fabrication d'un produit en matériaux composites, **caractérisé en ce qu'**il comprend la succession des étapes suivantes :
- tricotage trame/colonne simultané d'au moins un fil de maille et d'au moins un fil unidirectionnel de renfort, au moins un fil de maille comprenant un matériau de nature différente d'un matériau compris dans au moins un fil unidirectionnel de renfort, l'un desdits matériaux étant un matériau thermoplastique et l'autre matériau étant un matériau dit de renfort, au moins un fil unidirectionnel de renfort comprenant au moins un matériau de renfort et au moins un matériau thermoplastique, le matériau thermoplastique présentant un point de fusion inférieur au point de fusion du matériau de renfort,
- réalisation d'un tricot en trois dimensions constituant une préforme sèche, à la forme du produit à obtenir.

2. Procédé de fabrication d'une préforme sèche selon la revendication 1, dans lequel ledit au moins un fil unidirectionnel de renfort est introduit en trame, dans le sens des rangées, par dépose et emprisonnement dans les mailles, sans prise en charge par les mailles.

3. Procédé de fabrication d'une préforme sèche selon la revendication 1 ou 2, dans lequel au moins un fil unidirectionnel de renfort est introduit dans le sens des colonnes, par dépose et emprisonnement dans les mailles, sans prise en charge par les mailles.

4. Procédé de fabrication selon l'une des revendications précédentes, dans lequel on tricote simultanément une pluralité de fils de maille et/ou une pluralité de fils unidirectionnels de renfort.

5. Procédé de fabrication selon l'une des revendications précédentes, dans lequel au moins le fil unidirectionnel de renfort comprend un fil d'un matériau de renfort autour duquel est torsadé un fil d'un matériau thermoplastique.

6. Procédé de fabrication selon l'une des revendications 1 à 4, dans lequel le fil unidirectionnel de renfort comprend un fil d'un matériau de renfort entouré d'une gaine thermoplastique.

7. Procédé de fabrication selon l'une des revendications 1 à 4, dans lequel le fil unidirectionnel de renfort comprend le mélange intime d'une pluralité de filaments d'au moins un matériau de renfort et d'une pluralité de filaments d'au moins un matériau thermoplastique.

8. Procédé de fabrication selon l'une des revendications précédentes, dans lequel au moins un fil de maille est constitué d'un matériau de renfort ou est constitué d'un matériau thermoplastique.

9. Procédé selon l'une des revendications 1 à 7, dans lequel au moins un fil de maille comprend un matériau de renfort et un matériau thermoplastique.

10. Procédé de fabrication selon l'une des revendications précédentes, dans lequel un matériau thermoplastique est choisi parmi les polypropylènes et les polycarbonates, et un matériau de renfort est choisi parmi le verre, le carbone, le quartz et les aramides.

11. Préforme sèche susceptible d'être obtenue par le procédé selon l'une des revendications précédentes.

12. Procédé de fabrication d'un produit en matériaux composites utilisant la préforme sèche obtenue par la mise en oeuvre du procédé selon l'une quelconque des revendications 1 à 10, **caractérisé par** la succession des étapes suivantes :
- mise en place de ladite préforme sur un mannequin au profil du produit à réaliser,
- chauffage pour atteindre au moins la température du point de fusion la plus basse, afin d'imprégner et/ou d'enrober le au moins un autre fil en au moins un autre matériau par le au moins un matériau thermoplastique transformé par fusion, et
- refroidissement du produit ainsi obtenu.

13. Procédé de fabrication d'un produit en matériaux composites selon la revendication précédente, dans lequel la préforme est intégrée dans une matrice en résine.

14. Procédé de fabrication d'un produit en matériaux composites selon la revendication 12, qui ne comprend pas d'étape d'ajout de résine.

## Patentansprüche

1. Verfahren zur Herstellung einer trockenen, verformbaren Vorform, insbesondere zur Herstellung eines Produkts aus Verbundmaterialien,
**dadurch gekennzeichnet, dass** es die Abfolge der folgenden Schritte umfasst:
- gleichzeitiges Schuss-Kette-Stricken von mindestens einem Maschengarn und mindestens einem unidirektionalen Verstärkungsgarn, wobei mindestens ein Maschengarn ein Material umfasst, das sich von einem Material unterscheidet, das in mindestens einem unidirektionalen Verstärkungsgarn enthalten ist, wobei eines der Materialien ein thermoplastisches Material und das andere Material ein Verstärkungsmaterial ist, wobei mindestens ein unidirektionales Verstärkungsgarn mindestens ein Verstärkungsmaterial und mindestens ein thermoplastisches Material umfasst, wobei das thermoplastische Material einen Schmelzpunkt unterhalb des Schmelzpunkts des Verstärkungsmaterials aufweist,
- Herstellung eines dreidimensionalen Gewirks, das eine trockene Vorform in der Form des herzustellenden Produkts bildet.

2. Verfahren zur Herstellung einer trockenen Vorform nach Anspruch 1, bei dem das mindestens eine unidirektionale Verstärkungsgarn in Schussrichtung der Reihen durch Ablegen und Einschließen in die Maschen eingeführt wird, ohne von den Maschen aufgenommen zu werden.

3. Verfahren zur Herstellung einer trockenen Vorform nach Anspruch 1 oder 2, bei dem das mindestens eine unidirektionale Verstärkungsgarn in Kettenrichtung durch Ablegen und Einschließen in die Maschen eingeführt wird, ohne von den Maschen aufgenommen zu werden.

4. Herstellungsverfahren nach einem der vorstehenden Ansprüche, bei dem eine Vielzahl von Maschengarnen und/oder eine Vielzahl von unidirektionalen Verstärkungsgarnen gleichzeitig gestrickt werden.

5. Herstellungsverfahren nach einem der vorstehenden Ansprüche, bei dem mindestens das unidirektionale Verstärkungsgarn ein Garn aus einem Verstärkungsmaterial umfasst, um das ein Garn aus einem thermoplastischen Material gezwirnt ist.

6. Herstellungsverfahren nach einem der Ansprüche 1 bis 4, bei dem das unidirektionale Verstärkungsgarn ein Garn aus einem Verstärkungsmaterial umfasst, das von einem thermoplastischen Material umgeben ist.

7. Herstellungsverfahren nach einem der Ansprüche 1 bis 4, bei dem das unidirektionale Verstärkungsgarn die enge Mischung aus einer Vielzahl von Filamenten mindestens eines Verstärkungsmaterials und einer Vielzahl von Filamenten mindestens eines thermoplastischen Materials umfasst.

8. Herstellungsverfahren nach einem der vorstehenden Ansprüche, bei dem mindestens ein Maschengarn aus einem Verstärkungsmaterial besteht oder aus einem thermoplastischen Material besteht.

9. Verfahren nach einem der Ansprüche 1 bis 7, bei dem mindestens ein Maschengarn ein Verstärkungsmaterial und ein thermoplastisches Material umfasst.

10. Herstellungsverfahren nach einem der vorstehenden Ansprüche, bei dem ein thermoplastisches Material aus Polypropylenen und Polycarbonaten ausgewählt wird und ein Verstärkungsmaterial aus Glas, Kohlenstoff, Quarz und Aramiden ausgewählt wird.

11. Trockene Vorform, die durch das Verfahren nach einem der vorstehenden Ansprüche erhalten wird.

12. Verfahren zur Herstellung eines Produkts aus Verbundmaterialien unter Verwendung der trockenen Vorform, die durch die Durchführung des Verfahrens nach einem der Ansprüche 1 bis 10 erhalten wird, **gekennzeichnet durch** die Abfolge der folgenden Schritte:
- Anordnen der Vorform auf einem Dummy mit dem Profil des herzustellenden Produkts,
- Erhitzen auf mindestens die Temperatur des niedrigsten Schmelzpunktes, um das mindestens eine weitere Garn in mindestens einem anderen Material mit dem mindestens einen durch Schmelzen umgewandelten thermoplastischen Material zu imprägnieren und/oder zu beschichten, und
- Abkühlen des so erhaltenen Produkts.

13. Verfahren zur Herstellung eines Produkts aus Verbundmaterialien nach dem vorstehenden Anspruch, bei dem die Vorform in eine Harzmatrix integriert wird.

14. Verfahren zur Herstellung eines Produkts aus Verbundmaterialien nach Anspruch 12, das keinen Schritt des Hinzufügens von Harz umfasst.

## Claims

1. A method for producing a transformable dry preform, in particular for the creation of a product made of composite materials, **characterized in that** it comprises the sequence of the following steps:
- simultaneous weft/wale knitting of at least one stitch thread and at least one unidirectional reinforcement thread, at least one stitch thread comprising a material, the nature of which being different to that of a material comprised in at least one unidirectional reinforcement thread, one of said materials being a thermoplastic material and the other material being a material referred to as a reinforcement material, at least one unidirectional reinforcement thread comprising at least one reinforcement material and at least one thermoplastic material, the thermoplastic material having a melting point lower than the melting point of the reinforcement material,
- creation of a three-dimensional knit that constitutes a dry preform in the shape of the product that is to be obtained.

2. The method for producing a dry preform as claimed in claim 1, in which said at least one unidirectional reinforcement thread is introduced in weft, in the direction of the courses, being laid and held in the stitches without engaging with the stitches.

3. The method for producing a dry preform as claimed in claim 1 or 2, in which said at least one unidirectional reinforcement thread is introduced in the direction of the wales, being laid and held in the stitches without engaging with the stitches.

4. The production method as claimed in one of the preceding claims, in which a plurality of stitch threads and/or a plurality of unidirectional reinforcement threads are knitted simultaneously.

5. The production method as claimed in one of the preceding claims, in which at least the unidirectional reinforcement thread comprises a thread of a reinforcement material around which is twisted a thread of a thermoplastic material.

6. The production method as claimed in one of claims 1 to 4, in which the unidirectional reinforcement thread comprises a thread of a reinforcement material surrounded by a thermoplastic sheath.

7. The production method as claimed in one of claims 1 to 4, in which the unidirectional reinforcement thread comprises an intimate mixture of a plurality of filaments of at least one reinforcement material and a plurality of filaments of at least one thermoplastic material.

8. The production method as claimed in one of the preceding claims, in which at least one stitch thread consists of a reinforcement material or consists of a thermoplastic material.

9. The production method as claimed in one of claims 1 to 7, in which at least one stitch thread comprises a reinforcement material and a thermoplastic material.

10. The production method as claimed in one of the preceding claims, in which a thermoplastic material is selected from polypropylenes and polycarbonates, and a reinforcement material is selected from glass, carbon, quartz and aramids.

11. A dry preform obtainable by the method as claimed in one of the preceding claims.

12. A method for producing a product made of composite materials, using the dry preform obtained by implementing the method as claimed in any one of claims 1 to 10, **characterized by** the sequence of the following steps:
- putting said preform in place on a model having the profile of the product that is to be created,
- heating to at least the lowest melting point so as to impregnate and/or coat the at least one other thread made of at least one other material with the at least one thermoplastic material transformed by melting, and
- cooling the product obtained in this manner.

13. The method for producing a product made of composite materials as claimed in the preceding claim, in which the preform is integrated into a resin matrix.

14. The method for producing a product made of composite materials as claimed in claim 12, which does not comprise a step of adding resin.
